**Europäisches Patentamt**

**European Patent Office**

**Office européen des brevets**

(19)

(11) Veröffentlichungsnummer: **0 090 960**
**B1**

(12) # EUROPÄISCHE PATENTSCHRIFT

(45) Veröffentlichungstag der Patentschrift:
**02.07.86**

(51) Int. Cl.⁴: **B 23 K 35/36**, B 23 K 1/02

(21) Anmeldenummer: **83102353.6**

(22) Anmeldetag: **10.03.83**

(54) **Flussmittel zum maschinellen Weichlöten von Schwermetallen.**

(30) Priorität: **07.04.82 CH 2151/82**

(43) Veröffentlichungstag der Anmeldung:
**12.10.83 Patentblatt 83/41**

(45) Bekanntmachung des Hinweises auf die Patenterteilung:
**02.07.86 Patentblatt 86/27**

(84) Benannte Vertragsstaaten:
**DE FR GB IT SE**

(56) Entgegenhaltungen:
**CH-A-461 226**
**CH-A-596 935**
**DE-A-2 114 927**
**DE-A-2 238 874**
**GB-A-2 080 341**
**US-A-3 305 406**

**WELDING JOURNAL RESEARCH SUPPLEMENT,
Band 54, Nr. 10, Oktober 1975, Seiten 357s-362s,
Miami, florida, USA J.F. SHIPLEY: "Influence of
flux, substrate and solder composition on solder
wetting"**

(73) Patentinhaber: **LGZ LANDIS & GYR ZUG AG, CH-
6301 Zug (CH)**

(72) Erfinder: **Stratil, Tomas, Goldermattenstrasse 22,
CH- 6312 Steinhausen (CH)**
Erfinder: **Pisinger, Milos, Seefeldstrasse 194, CH-
8008 Zürich (CH)**
Erfinder: **Fehr, Peter, Bohlstrasse 20, CH- 6300 Zug
(CH)**

(74) Vertreter: **Müller, Hans- Jürgen, Dipl.- Ing., Müller,
Schupfner & Gauger Lucile- Grahn- Strasse 38
Postfach 80 13 69, D-8000 München 80 (DE)**

## Beschreibung

Die Erfindung bezieht sich auf ein Flußmittel zum maschinellen Löten von Schwermetallen bzw. Schwermetall-Legierungen der im Oberbegriff des Patentanspruches 1 genannten Gattung. Ein solches Flußmittel dient zur Anwendung bzw. nach der Kategorie F-SW32 der DIN-Norm 8511. Dabei bedeuten:

F = Flußmittel
S = Schwermetall (als Substrat)
W = Weichlösen
32 = Flußmittel auf der Basis organischer Säuren als lötaktiver Komponente.

Es ist bereits ein Flußmittel nach dem Oberbegriff des Patentanspruchs 1 genannten Gattung bekannt, bei dem zwischen 1,5 und 25 Gew.-% Adipinsäure und ein oder mehrere Alkohole als lötaktive Komponente verwendet und in Äthylalkohol und/oder Isopropylalkohol gelöst werden. Beim Löten werden Polyester gebildet, welche zwar keine ätzende Wirkung mehr auf die Lötstelle ausüben, jedoch für Stromleitungstests höchst unerwünschte Reste bilden. (DE-A-2114 927).

Darüber hinaus sind als Dispersionen (Emulsionen oder Suspensionen) vorliegende Flußmittel bekannt, bei denen mindestens 15 % Feststoffanteile vorhanden sind, welche nach dem Löten ebenfalls unerwünschte Reste bilden.

Bei den maschinell gelöteten Leiterplatten hängt das Gelingen einer einwandfreien Lötung weitgehend vom verwendeten Flußmittel ab, das die Aufgabe hat, beim Lötvorgang den oft nicht sichtbaren Oxidüberzug des Substrats zu entfernen, eine durch die erhöhte Temperatur verursachte Weiteroxydation zu verhindern und schließlich den innigen Kontakt des flüssigen Lots mit der Unterlage zu ermöglichen. Sofern wie bei dem oben genannten Stand der Technik Flußmittelreste verbleiben, müssen diese zur Vermeidung nachfolgender Korrosion oder zur Behinderung von Leitfähigkeitstests einem zusätzlichen Abwaschvorgang od.dgl. unterworfen werden. Solche Reinigungsoperationen für halogenfreie Flußmittel sind jedoch aufwendig und im übrigen auch oft unvollkommen. Insbesondere in der Abdeckzone und an der Oberseite sind oft noch unerwünschte Reste vorhanden.

Darüber hinaus sind flüssige Flußmittel bekannt (DE-A-27 25 701), welche verhältnismäßig große Anteile an Kolophonium bzw. Chloriden enthalten. Solche Substanzen stören jedoch beim sog. "In-Circuit-Test", bei dem viele Kontaktstellen gleichzeitig mittels eines Computers überprüft werden. Die Fehlerquote bei Verwendung solcher Flußmittel ist verhältnismäßig groß.

Der Erfindung liegt die Aufgabe zugrunde, das eingangs genannte Flußmittel dahingehend zu verbessern, daß mit möglichst wenig Flußmittel und unter Anwendung möglichst weniger Verfahrensschritte gelötet werden kann, ohne daß sich die geschilderten Probleme beim In-Circuit-Test ergeben.

Die Erfindung ist im Patentanspruch 1 gekennzeichnet und in Unteransprüchen sind weitere Ausbildungen derselben beansprucht.

Nach der Erfindung werden verhältnismäßig wenig Anteile an lötaktiver Komponente und darüber hinaus ein ebenfalls nur geringer Anteil einer zusätzlichen Trägerkomponente verwendet, welche überraschenderweise die oben genannte Aufgabe erfolgreich lösen. So kann das Auswaschen von Flußmittelrückständen und -reaktionsprodukten mit organischen Lösungsmitteln nach dem Löten erspart werden, obwohl einwandfrei gelötete Leiterplatten herstellbar sind. Das Verfahren arbeitet daher äußerst wirtschaftlich und Störungen durch "isolierende Punkte" beim In-Circuit-Test werden vermieden.

Auf normale Weise bestückte Leiterplatten werden im Wellen- oder Schlepplötverfahren gelötet. Die in die Maschine eingeführten Leiterplatten werden mit einer nichtschäumenden Lösung von höchstens 3 % einer organischen Säure als lötaktive Komponente in einem halogenfreien organischen Lösungsmittel einseitig behandelt. Dies kann durch Besprühen, Bespritzen, Aufbürsten oder im Wellenverfahren erfolgen. Anschließend wird getrocknet. Die organische Säure, d.h. die lötaktive Komponente, ist vorzugsweise Bernsteinsäure, die wegen ihrer zwei nur durch zwei Methylengruppen getrennten Carboxylgruppen eine gute oxidlösende Wirkung aufweist. Als Lösungsmittel dienen Isopropanol oder eine Mischung mit einem die Konzentration des Azeotrops im wesentlichen nicht übersteigenden Anteil an Wasser.

Ein weiterer Zusatz zur Flußmittel-Lösung, nämlich Trägerkomponente, ist eine bei der Temperatur des flüssigen Lots flüssige andere organische Säure, nämlich Korksäure, in einem Anteil von z.B. 10 g/l bezogen auf die Lösung.

Diese Trägerkomponente schmilzt beim Lötvorgang und die lötaktive Komponente wird in der geschmolzenen Trägerkomponente gelöst. Dadurch wird die Benetzung der zu lötenden Stellen wesentlich verbessert.

Die Trägerkomponente wird anschließend mit der Lotwelle von der Leiterplatte abgespült. Sie schwimmt auf dem geschmolzenen Lot und verhindert auf dem Substrat die Bildung von störenden Erscheinungen wie Brücken, Zapfen usw.

Mit der Trägerkomponente werden auch Flußmittelreste und chemische Abbauprodukte mitgenommen, so daß die Leiterplatten sauber bleiben.

Die getrockneten Leiterplatten werden anschließend im Schwall-Lötverfahren gelötet und können sodann ohne weitere Behandlung die Kontrolle passieren. Die Lötstellen sind einwandfrei, obwohl bedeutend weniger Flußmittel benötigt wurde und das Auswaschen nach der Lötung unterlassen werden konnte. Zudem kann die Bernsteinsäure samt der anderen Komponente bei der Herstellung der Flußmittel- Lösung problemlos in kurzer Zeit in Isopropanol gelöst werden.

Zur Verbesserung der gleichmäßigen Benetzung des Substrats mit der Flußmittel-Lösung kann dieser ein vorzugsweise nichtionogenes Netzmittel in einer Konzentration von ca. 2 g/l Lösung zugesetzt werden.

Um eine Ansammlung von Flußmittel im Bereich komplizierter Halterungen oder Abdeckungen in diesen Bereichen zu vermeiden, kann die Menge an aufgetragenem Flußmittel durch besondere Maßnahmen reduziert werden, z.B. Verminderung der Umdrehungszahl der Trommel bei Sprayanlagen.

Beim Auftrag des Flußmittels entstehen Metallsalze, die sich im Flußmittelbad als unlösliche, schwebende Festkörperteilchen aufkonzentrieren. Unter normalen Bedingungen erreicht die Aufkonzentrierung nach einigen Tagen eine Grenze, bei der die Metallsalze auf die gelöteten Platten zurückgelangen. Dies geschieht unregelmäßig, aber insbesondere am Anfang des Arbeitstages. Das Resultat sind Flecken an den gelöteten Platten. Im weiteren führen feste Partikel zur Verminderung der Lötqualität.

Diese Schwierigkeiten lassen sich vermeiden, indem die Flußmittel-Lösung mittels eines feinen Filters, beispielsweise mit einer Porengröße von 3 μm, ständig filtriert wird. Dadurch werden auch in diese Lösung geratene Staubpartikel entfernt und die Standzeit der Lösung verbessert. Die verbrauchten Komponenten werden durch eine verdünnte Flußmittel-Lösung ersetzt.

Die Wirkungsweise des Flußmittels läßt sich folgendermassen erklären: Eine dünne und schnell schmelzbare Schicht genügt, um eine einwandfreie Lötung unter vollständiger Entfernung des Oxydüberzugs auf den Leiterbahnen zu gewährleisten. Durch die Erhitzung im Lötschwall werden die Bernsteinsäure (Schmelzpunkt 185° C) und die Trägerkomponente geschmolzen. Sie bilden einen vollständig geschlossenen dünnen Film über dem Substrat und lösen einen Oxydüberzug auf. Bei Verwendung von Sn/Pb-Loten liegt die Löttemperatur bei 240 - 260° C. Dabei wird ein Grossteil der beim Auflösen von Oxiden nicht verbrauchten Bernsteinsäure zersetzt oder durch Dehydratation in das Anhydrid verwandelt.

Die unerwünschten Produkte werden mit der Trägerkomponente durch den Lötschwall zum grössten Teil entfernt. Eine Störung des "In Circuit Tests" ist damit ausgeschlossen.

Für besondere Anforderungen, z.B. für die Nachrichtentechnik, können gegebenenfalls wesentlich vereinfachte Reinigungsmethoden eingesetzt werden. Dazu gehört eine einfache Reinigung mit Wasser oder einem Wasser/Alkohol-Gemisch bei gleichzeitig wesentlich verbesserter Endsauberkeit im Vergleich mit allen anderen gängigen Flußmitteln.

## Patentansprüche

1. Flußmittel zum maschinellen Löten mit Schwermetallen bzw. Schwermetall-Legierungen in flüssiger, kolophoniumfreier und halogenfreier Form mit einer Lösung einer als lötaktiver Komponente dienenden organischen Säure in einem halogen, freien organischen Lösungsmittel, dadurch gekennzeichnet, daß die lötaktive Komponente Bernsteinsäure in einer Konzentration im Lösungsmittel von höchstens 3 % aufweist und daß Korksäure in einem Anteil von höchstens etwa 1 % (bezogen auf das Lösungsmittel) als eine bei Löttemperatur flüssige und die lötaktive Komponente lösende Trägerkomponente dient.

2. Flußmittel nach Anspruch 1 gekennzeichnet durch einen Anteil an einem zusätzlichen nichtionogenen Netzmittel.

3. Verfahren zum Regenerieren des Flußmittels nach einem der vorhergehenden Ansprüche, dadurch gekennzeichnet, daß die gebrauchte Flußmittellösung in einem Filter einer Porengröße von ca. 3 μm gefiltert und die verbrauchte Komponente durch eine verdünnte Flußmittellösung ersetzt wird.

## Claims

1. A fluxing agent for the machine soldering of heavy metals or heavy metal alloys in liquid, colophony-free and halogen-free form with a solution of an organic acid, which serves as a soldering-active component, in a halogen-free organic solvent, characterised in that the soldering-active component has succinic acid in a concentration in the solvent of at most 3 % and that suberic acid in a proportion of at most about 1 % (with respect to the solvent) serves as a carrier component which is liquid at soldering temperature and which dissolves the soldering-active component.

2. A fluxing agent according to claim 1 characterised by a proportion of an additional non-ionogenic wetting agent.

3. A process for regenerating the fluxing agent according to one of the preceding claims characterised in that the used fluxing agent solution is filtered in a filter with a pore size of about 3 μm and the spent component is replaced by a dilute fluxing agent solution.

## Revendications

- Flux pour un brasage mécanisé avec des métaux lourds ou des alliages de métaux lourds sous une forme liquide, exempte de colophane et exempte d'halogènes, avec une solution d'un acide organique servant de composant actif pour le brasage dans un solvant organique exempt d'halogènes, caractérisé en ce que le composant actif pour le brasage contient de l'acide succinique avec une concentration au maximum de 3 % dans un solvant et en ce que de l'acide subérique en proportion maximale d'environ 1 % (rapportée au solvant) sert de composant porteur liquide à la température de brasage et dissolvant le composant actif pour le brasage.

2 - Flux selon la revendication 1, caractérisé en ce qu'il contient un agent de mouillage additionnel non-ionogène.

3 - Procédé de régénération du flux selon une des revendications précédentes, caractérisé en ce que la solution de flux utilisée est filtrée dans un filtre d'une grosseur de pores d'environ 3 μm et le composant utilisé est remplacé par une solution de flux diluée.